# FASCICULE DE BREVET EUROPEEN

(11) **EP 4 472 868 B1**
(45) Date de publication et mention de la délivrance du brevet: **03.12.2025**
(21) Numéro de dépôt: 23701426.1
(22) Date de dépôt: 19.01.2023
(51) Int. Cl.: B60R 16/027

(54) **LIAISON ÉLECTRIQUE POUR VITRAGE DE VÉHICULE COULISSANT, VITRAGE ET VÉHICULE COMPRENANT CETTE LIAISON ÉLECTRIQUE**
ELEKTRISCHE VERBINDUNG FÜR EINE SCHIEBEVERGLASUNGSEINHEIT EINES FAHRZEUGS, VERGLASUNGSEINHEIT UND FAHRZEUG MIT DIESER ELEKTRISCHEN VERBINDUNG
ELECTRICAL LINK FOR A SLIDING VEHICULAR GLAZING UNIT, GLAZING UNIT AND VEHICLE COMPRISING THIS ELECTRICAL LINK

(30) Priorité: 04.02.2022 FR 2200991
(43) Date de publication de la demande: 11.12.2024
(73) Titulaire: Saint-Gobain Sekurit France, 60150 Thourotte (FR)
(72) Inventeur: LAMOUREUX, Laurent, 60150 Thourotte (FR); DROUET, Xavier, 60150 Thourotte (FR)
(74) Mandataire: Saint-Gobain Recherche
(86) Numéro de dépôt international: PCT/EP2023/051277
(87) Numéro de publication internationale: WO 2023/148011

(56) Documents cités:
- US-A1- 2003 119 338
- US-A1- 2016 260 520
- US-B1- 6 290 283
- US-B2- 10 038 314

## Description

La présente invention se rapporte à une liaison électrique flexible pour un vitrage de véhicule mobile en translation par rapport à un élément de carrosserie dudit véhicule, ladite liaison électrique flexible présentant un connecteur amont attachable à un élément intérieur fixé à ladite carrosserie et un connecteur aval attachable à une vitre dudit vitrage.

Il s'agit d'une liaison électrique flexible dans le sens où cette liaison accompagne le vitrage dans son mouvement par rapport à la carrosserie de sorte que la connexion électrique existe quelle que soit la position du vitrage par rapport à la carrosserie : ouvert, fermé ou entre ces deux états. Le document US2016/260520 décrit une telle liaison électrique selon le préambule de la revendication 1.

La présente invention se rapporte aussi à un vitrage de véhicule comportant une vitre, des moyens pour permettre la mobilité de ladite vitre en translation par rapport à un élément de carrosserie dudit véhicule et au moins une liaison électrique flexible, ainsi qu'à un véhicule équipé d'un vitrage comportant une vitre, des moyens pour permettre la mobilité de ladite vitre en translation par rapport à un élément de carrosserie dudit véhicule et au moins une liaison électrique flexible.

Il est connu qu'un vitrage de véhicule peut nécessiter une alimentation électrique, par exemple pour permettre d'alimenter des moyens de chauffage du vitrage, comme un réseau de fils très fin ou une couche ou un empilement de couches, ou encore pour permettre de modifier la transparence du vitrage et/ou sa teinte.

Les demandes internationales de brevet N° WO 2020/114639 et WO 2020/01949 exposent des vitrages à film multicouche à propriétés optiques commutables électriquement. La tension appliquée peut être utilisée pour contrôler la transmission de la lumière visible à travers des éléments fonctionnels PDLC ou SPD. Un vitrage avec de tels éléments fonctionnels peut donc être commodément obscurci électriquement.

Lorsqu'un tel vitrage est mobile par rapport à la carrosserie, et en particulier lorsqu'il est mobile par translation (ou coulissement), il est difficile de réaliser une alimentation électrique qui va accompagner correctement le vitrage dans son mouvement par rapport à la carrosserie, ou par rapport à une partie de carrosserie comme une porte (ou portière). Il est surtout difficile d'obtenir que cet accompagnement soit fiable dans le temps et dure toute la durée de vie du véhicule.

Le but de la présente invention est donc de proposer un agencement de liaison électrique flexible fiable et compacte d'un vitrage de véhicule mobile en translation, un agencement de vitrage de véhicule mobile en translation qui comporte au moins un telle liaison électrique flexible ainsi qu'un véhicule comportant au moins un tel vitrage.

L'invention repose sur la découverte qu'une configuration particulière de liaison électrique flexible peut permettre de réaliser une connexion électrique fiable, tout en étant particulièrement compacte, entre un élément de carrosserie fixe et un vitrage mobile en translation.

La présente invention se rapporte ainsi dans son acception la plus large à une liaison électrique flexible pour un vitrage de véhicule selon la revendication 1. Ce vitrage est mobile en translation par rapport à un élément de carrosserie dudit véhicule et ladite liaison électrique flexible présente, selon sa longueur, un connecteur amont attachable à un élément intérieur fixé à ladite carrosserie et un connecteur aval attachable à une vitre dudit vitrage. Ladite liaison électrique flexible est remarquable en ce qu'elle comporte une nappe électrique flexible comportant au moins un fil conducteur et/ou au moins une bande conductrice et présente une forme latérale incurvée sur elle-même à la liaison avec ledit connecteur amont et avec ledit connecteur aval.

Une nappe électrique flexible est un élément de liaison électrique long, présentant une largeur et une épaisseur avec la largeur plus grande que l'épaisseur et qui comporte deux extrémités longitudinales ; ce n'est pas un câble électrique dans le sens où un câble électrique présente généralement une section externe circulaire.

Une nappe électrique est flexible dans le sens où sa forme générale peut être modifiée facilement, en particulier en appliquant des forces du même ordre de grandeur que les forces appliquées par des bras humains.

Un connecteur est un élément permettant de brancher et de débrancher électriquement la nappe électrique flexible à ses extrémités longitudinales, en amont à un système électrique appartenant au véhicule et en aval à la vitre.

La forme latérale incurvée est une forme dont l'incurvation se constate selon la direction latérale de la nappe électrique flexible, ou transversale, c'est-à-dire selon sa largeur, perpendiculairement à sa longueur.

La présente invention repose sur la découverte que l'application d'une forme particulière, ici une incurvation latérale (c'est-à-dire une incurvation de la totalité de la section de la nappe électrique flexible, perpendiculairement à la longueur de la nappe électrique flexible) à chacune des deux extrémités longitudinales de la nappe électrique flexible, permet de réaliser un pliage de la nappe électrique flexible selon sa longueur sur elle-même entre ces deux extrémités longitudinales, ce pliage étant peu épais (les deux plis, ou portions de nappe électrique flexible, sont proches l'un de l'autre dans l'environnement où ils sont superposés). Ce pliage de la nappe électrique flexible sur elle-même, ou repli, est mobile : sa position dans le référentiel du vitrage mobile en translation change en fonction de la position de la vitre, c'est-à-dire en fonction de la position du connecteur aval en considérant que le connecteur amont est fixe dans ce référentiel. Même si la position du repli change le long de la nappe électrique flexible, entre les deux formes latérales incurvées, sa forme générale est identique. Il n'y a ainsi pas de zone à usure prématurée et la fiabilité de la liaison électrique flexible est très élevée.

D'une manière surprenante, ce pliage crée une sorte de rigidité de la nappe électrique flexible dans la zone où la forme latérale incurvée est présente et cette rigidité permet de réaliser un repli longitudinal de la nappe électrique flexible sur elle-même dans une portion située entre les deux formes latérales incurvées, avec une épaisseur finale de ce repli qui est petite, c'est-à-dire avec un rayon de courbure du repli qui est petit. Ce repli de la nappe électrique flexible sur elle-même sur une petite épaisseur permet de réaliser un « chemin » de la nappe électrique flexible lors du coulissement du vitrage, c'est-à-dire un volume total occupé par la liaison électrique flexible lors des translations du vitrage, qui est petit. L'encombrement nécessaire pour la liaison électrique flexible est donc réduit.

Cet encombrement réduit permet à la fois de positionner la liaison électrique flexible dans un volume caché réduit (comme par exemple à l'intérieur d'un montant d'une porte de véhicule ou à l'intérieur d'un toit de véhicule) et à la fois d'empêcher une usure prématurée de la nappe électrique flexible. En effet, si la nappe électrique flexible se trouve en contact avec une arrête de la vitre, c'est-à-dire un coin entre d'une part une face extérieure ou intérieure et d'autre part un chant, elle peut être abimée par le contact répété avec cette arrête ; en prévoyant que la nappe électrique flexible se replie sur elle-même dans un volume étroit, il est empêché que la nappe électrique flexible entre en contact avec une arrête de la vitre et l'usure prématurée de la nappe électrique flexible est ainsi empêchée.

Pour faciliter ce pliage de la nappe électrique flexible sur elle-même, ces deux incurvations sont de préférence dans le même sens lorsque la nappe électrique flexible est considérée à plat (sans repli). Pour faciliter le montage, ces deux incurvations sont de préférence dans la même direction (c'est-à-dire avec le même angle), lorsque la nappe électrique flexible est considérée à plat.

De préférence, la liaison électrique flexible est constituée de ladite nappe électrique flexible, dudit connecteur amont attachable à un élément intérieur fixé à ladite carrosserie et dudit connecteur aval attachable à une vitre dudit vitrage ; il n'y a pas de connecteur, ou d'élément intermédiaire, entre le connecteur amont et le connecteur aval. La liaison électrique flexible est ainsi très simple et très fiable. Elle est en outre très légère.

En situation d'utilisation, lorsque ladite nappe électrique flexible est observée selon sa longueur, elle présente ainsi deux formes latérales incurvées (la nappe est incurvée sur elle-même latéralement à chacune de ses extrémités) et un repli qui est situé longitudinalement entre ces deux formes latérales incurvées.

Lorsque la nappe électrique flexible est observée pliée sur elle-même (repliée), les deux incurvations présentent de préférence un plan de symétrie, à l'image d'une molécule chirale. Ainsi, le repli présente toujours la même forme et le risque de créer une zone de faiblesse dans la nappe électrique flexible est diminué.

Un repli de ladite nappe électrique flexible est un pli sur elle-même, à 180 °. Il est, de préférence, unique ; en situation d'utilisation, il est toujours présent et ne disparaît pas, quelle que soit la position de la vitre (ouverte, fermée, ou entre les deux).

A l'endroit de ce repli longitudinal, la nappe électrique flexible est sensiblement plate latéralement : sa section transversale présente une forme non-incurvée, ou plate ; Cette forme plate participe à la fiabilité dans le temps : à l'endroit où la nappe flexible est plate et pliée longitudinalement, ses contraintes internes sont orientées seulement selon la longueur et il n'y a pas de contraintes internes selon la largeur ; si la nappe électrique flexible était incurvée sur elle-même latéralement à l'endroit du repli longitudinal, ses contraintes internes seraient orientées à la fois selon sa longueur et selon sa largeur et cela engendrerait de la fatigue du ou des matériaux constitutifs de la nappe électrique flexible ; avec le temps, cette fatigue abimerait le matériau de la nappe flexible et augmenterait le risque de rupture.

Il est possible de configurer directement la nappe électrique flexible pour qu'elle présente d'elle-même, par exemple par une opération de moulage spécifique de la nappe électrique flexible, une forme latérale incurvée à la liaison avec ledit connecteur amont et avec ledit connecteur aval.

De préférence, pour que la nappe électrique flexible présente une forme latérale incurvée qui reste identique tout le long de sa vie à la liaison avec ledit connecteur amont et avec ledit connecteur aval, ledit connecteur amont et ledit connecteur aval comportent chacun une surface d'accueil qui est en contact avec ladite nappe électrique flexible et qui est incurvée latéralement ; ainsi, c'est la surface d'accueil des connecteurs qui applique la forme latérale incurvée aux deux extrémités de la nappe électrique flexible.

De préférence, pour faciliter le branchement électrique, ladite surface d'accueil dudit connecteur amont et/ou dudit connecteur aval (et de préférence des deux) est incurvée longitudinalement et se termine à une extrémité proximale (à proximité de la vitre ou de l'élément intérieur fixé à la carrosserie) par une partie plate. Cette configuration participe en outre à l'obtention d'une grande compacité.

De préférence, pour faciliter le pliage de ladite nappe électrique flexible sur elle-même (pour faciliter la réalisation du repli), au moins une desdites formes latérales incurvées, et de préférence chaque forme latérale incurvée, présente, vue en coupe transversale, une forme générale en V (avec un seule point d'incurvation, de préférence situé au milieu de la largeur de ladite nappe électrique flexible), avec un angle entre deux ailes du V qui est compris entre 60 ° et 120 °, voire entre 80 ° et 100 ° ; de préférence de 90 °.

La présente invention se rapporte par ailleurs à un vitrage de véhicule comportant une vitre, des moyens pour permettre la mobilité de ladite vitre en translation par rapport à un élément de carrosserie dudit véhicule et au moins une liaison électrique flexible selon l'invention, dans lequel ledit connecteur aval est attaché à ladite vitre.

Cet attachement peut être réalisé par clippage ou par fabrication in situ du connecteur amont sur la vitre.

La fiabilité dans le temps du vitrage est augmentée du fait que la fiabilité de la liaison électrique flexible est augmentée.

De préférence, pour ce vitrage, ladite nappe électrique flexible présente deux formes latérales incurvées (la nappe est incurvée sur elle-même latéralement à chacune de ses extrémités) et un repli, sensiblement plat, qui est situé longitudinalement entre ces deux formes latérales incurvées.

Ladite vitre présente une ligne de vision réalisant, lorsque le vitrage est considéré verticalement, une séparation entre d'une part une partie cachée de la vitre qui est située sous ladite ligne de vision et qui est destinée à être cachée à l'intérieur d'une partie carrosserie quelle que soit la position de ladite vitre par rapport à cette partie carrosserie et d'autre part une partie visible de la vitre qui est située au-dessus de ladite ligne de vision, ladite partie cachée de la vitre comprenant au moins une zone de fixation pour la fixation de ladite vitre auxdits moyens pour permettre la mobilité.

Ledit vitrage comporte ainsi une ligne de vision qui, bien que constituant une référence par rapport à l'usage du vitrage, appartient au vitrage en tant que tel, et est distinct de l'utilisation finale du vitrage dans le sens où cette ligne est une donnée prévue dès la conception du vitrage ; elle est visible sur le plan de conception et de fabrication du vitrage.

Le « chant », ou « rive », désigne le côté étroit d'une feuille, qui est situé sensiblement transversalement entre les deux faces principales d'une feuille.

L'attachement du connecteur aval à ladite vitre est, de préférence, réalisé près d'un bord de la vitre ; de préférence dans une partie cachée de la vitre.

De préférence, ladite vitre comporte des moyens électriques, comme des moyens pour chauffer ladite vitre et/ou des moyens pour éclaircir et assombrir ladite vitre et/ou pour changer la teinte de ladite vitre.

Pour faciliter la fabrication du vitrage, ledit connecteur aval peut être attaché aux moyens pour permettre la mobilité de ladite vitre en translation.

Lesdits moyens pour permettre la mobilité de ladite vitre peuvent comprendre, au sens de la présente invention, un ou plusieurs porte-vitre, une ou plusieurs gouttières d'attache (« holder » en anglais), un ou plusieurs rails, ou coulisses.

De préférence, lesdits moyens pour permettre la mobilité de ladite vitre en translation verticale par rapport à une porte dudit véhicule comporte un porte-vitre présentant une partie en U enchâssant une partie de ladite vitre.

Lesdits moyens pour permettre la mobilité de ladite vitre peuvent comprendre un ou plusieurs trous traversant partiellement ou totalement ladite vitre (c'est-à-dire sur une partie de l'épaisseur d'un élément la composant dans la zone de fixation ou la totalité de l'épaisseur de cet élément dans la zone de fixation).

Ladite vitre peut être complètement monolithique (constituée d'une seule feuille de verre ou de plastique) ou être complètement multiple (constituée de plusieurs feuilles de verre ou de plastique) ou encore être partiellement multiple dans une partie, comme par exemple dans la partie visible et partiellement monolithique, comme par exemple dans la partie cachée. La notion de « vitre multiple » concerne en particulier le feuilletage, c'est-à-dire la présence d'au moins trois feuilles : une feuille de verre extérieure, une feuille de verre intérieure et une feuille intercalaire de matière adhésive située entre ces deux feuilles.

Lorsque la vitre est partiellement ou complètement feuilletée, elle comporte, dans sa partie feuilletée, de l'extérieur vers l'intérieur, au moins, dans cet ordre : une feuille de verre extérieure, une feuille intercalaire de matière adhésive puis une feuille de verre intérieure ; toutefois, il est possible qu'au moins une autre feuille soit intercalée entre la feuille de verre extérieure et la feuille intercalaire de matière adhésive ou entre la feuille intercalaire de matière adhésive et feuille de verre intérieure. En variante, la vitre peut être constituée de la feuille de verre extérieure, de la feuille intercalaire de matière adhésive et de la feuille de verre intérieure, sans aucune autre feuille.

Avantageusement, l'épaisseur de ladite feuille de verre extérieure est comprise entre 2,85 mm et 4,85 mm. De préférence, ladite feuille de verre extérieure présente des contraintes de surface entre 80 et 200 MPa pour une épaisseur de ladite feuille de verre extérieure comprise entre 2,85 et 4,85mm.

Avantageusement, l'épaisseur de ladite feuille de verre intérieure est comprise entre 0,30 mm et 2,60 mm. Elle peut être en particulier entre 0,70 mm et 2,10 mm, voire entre 1,0 mm et 1,60 mm.

Dans un mode préféré de réalisation de la présente invention, l'épaisseur de ladite feuille de verre intérieure est comprise 1,00 mm et 1,20 mm.

Avantageusement, ladite feuille de verre extérieure présente des contraintes de surface au maximum de 20 MPa, de 30 MPa et de 40 MPa respectivement pour une épaisseur de ladite feuille de verre extérieure d'environ 1,1 mm, d'environ 1,6 mm et d'environ 2,1 mm. Le terme « environ » désigne ici une valeur considérée par l'homme du métier comme une valeur standard, même si localement cette valeur peut varier dans une fourchette de plus ou moins 10 %.

La feuille de matière adhésive intercalaire est par exemple une feuille en polyvinylbutyral (PVB) présentant une épaisseur comprise entre 0,30 et 1,50 mm, par exemple de 0,78 mm.

Dans le cas où la vitre comporte une ou plusieurs autre(s) feuille(s) en plus des trois mentionnées précédemment, la feuille de verre extérieure est la feuille de la vitre feuilletée qui est la plus à l'extérieur.

La présente invention se rapporte par ailleurs à véhicule équipé d'un vitrage comportant une vitre selon l'invention, des moyens pour permettre la mobilité de ladite vitre en translation par rapport à un élément de carrosserie dudit véhicule et au moins une liaison électrique flexible l'invention, dans lequel ledit connecteur amont est attaché à un élément intérieur fixé à ladite carrosserie et ledit connecteur aval est attaché à ladite vitre.

La fiabilité dans le temps du véhicule est augmentée du fait que la fiabilité de la liaison électrique flexible est augmentée. L'espace utile à l'intérieur du véhicule est augmentée du fait que l'encombrement de la liaison électrique flexible est réduit.

Ladite nappe électrique flexible présente, de préférence, selon sa longueur un repli présentant un rayon de courbure compris entre 0,2 et 20,0 mm, de préférence compris entre 5,0 et 15,0 mm.

Dans ce véhicule, ladite vitre comporte, de préférence, des moyens pour chauffer ladite vitre et/ou des moyens pour éclaircir et assombrir ladite vitre et/ou pour changer la teinte de ladite vitre.

Dans ce véhicule, de préférence, ladite nappe électrique flexible, et de préférence encore chaque nappe électrique flexible, s'étend selon sa longueur dans une direction parallèle à une composante essentielle de la direction de translation de ladite vitre ; c'est-à-dire que :
- si la vitre translate ou coulisse essentiellement selon la verticale (complètement selon la verticale sans composante selon l'horizontale ou avec une petite composante selon l'horizontale), alors la nappe électrique flexible s'étend selon la verticale ; et
- si la vitre translate ou coulisse essentiellement selon l'horizontale (complètement selon l'horizontale sans composante selon la verticale ou avec une petite composante selon la verticale), alors la nappe électrique flexible s'étend selon l'horizontale.

Dans ce véhicule, ledit élément intérieur est, de préférence, un guide intérieur pour ladite nappe électrique flexible, pour l'empêcher d'aller plus vers l'intérieur ; il peut appartenir au vitrage tel que fourni pour intégration dans le véhicule.

Dans ce véhicule, de préférence, le connecteur amont est fixe dans le référentiel dudit vitrage mobile en translation.

La présente invention a été développée pour les vitrages incorporés dans des portes présentant des montants latéraux et un montant supérieur au niveau du vitrage lorsque celui-ci est fermé.

Avantageusement la présente invention permet de réaliser une liaison électrique flexible fiable et compacte pour un vitrage de véhicule. Cette connexion est en outre légère et facile à fabriquer. Le vitrage en lui-même est également léger et facile à fabriquer. Le véhicule équipé d'une telle liaison électrique flexible ou d'un tel vitrage est également léger et facile à fabriquer ; l'encombrement de la liaison électrique est réduit et procure un gain de place à l'intérieur du véhicule.

Avantageusement, la vitre du vitrage selon l'invention est non plate ; la liaison électrique flexible selon l'invention est particulièrement performante lorsque le mouvement de coulissement de la vitre est complexe (avec des composantes de translation dans deux directions de l'espace).

Avantageusement, le vitrage selon l'invention n'est pas un vitrage mobile en rotation par rapport à une carrosserie.

La présente invention sera mieux comprise à la lecture de la description détaillée ci-après d'exemples de réalisation non limitatifs et des figures schématiques ci-jointes :
- [Fig.1] illustre une vue schématique de face extérieure d'une portière arrière (hayon) d'un véhicule automobile s'ouvrant par rotation par rapport à une axe horizontal, ladite portière comportant un vitrage mobile en translation verticale et comportant deux zones de fixation ainsi qu'une liaison électrique flexible ;
- [Fig.2] illustre une vue par transparence et en perspective d'une liaison électrique flexible ;
- [Fig.3] illustre une vue en coupe transversale verticale d'un hayon avec le vitrage en position haute (références finissant par « a »), fermée, et en position basse, ouverte (références finissant par « b ») ;
- [Fig.4] illustre une vue en coupe partielle de la [Fig.3] montrant uniquement le vitrage en position basse, ouverte ; et
- [Fig.5] illustre une vue en perspective d'un connecteur aval.

Il est précisé que les proportions entre les divers éléments représentés dans les figures sont respectées afin d'en faciliter la lecture.

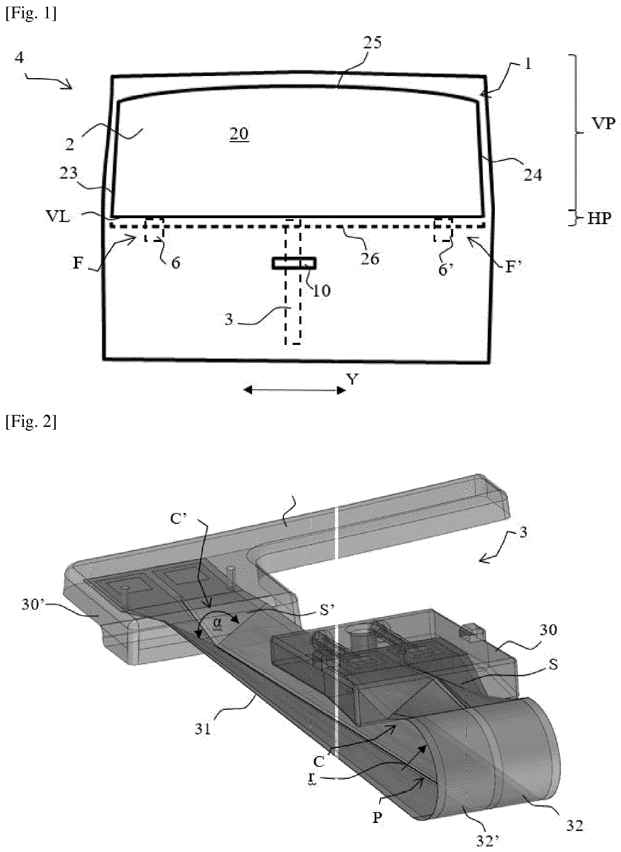

La [Fig.1] illustre une porte 4 arrière d'un véhicule automobile, vue de face, de l'arrière du véhicule et de l'extérieur. Cette porte, ou hayon, est mobile en rotation par rapport à un axe horizontal situé ici en haut ; cette mobilité peut être mise en œuvre par action sur une poignée 10. Cette porte comporte un vitrage 1 qui est mobile en translation essentiellement selon la verticale entre une position ouverte dans laquelle le vitrage se situe en totalité ou en quasi-totalité à l'intérieur de la portière et une position fermée dans laquelle le vitrage ferme une baie de la porte.

La situation du vitrage 1 dans une porte 4 arrière est prise ici à titre d'exemple, tout comme le fait qu'elle est mobile en rotation par rapport à un axe horizontal.

La porte 4 pourrait être une porte latérale, ou portière, et le vitrage serait alors un vitrage latéral de véhicule (qui est mobile entre translation par rapport à cette portière essentiellement selon la verticale entre une position ouverte dans laquelle le vitrage se situe en totalité ou en quasi-totalité à l'intérieur de la portière et une position fermée dans laquelle le vitrage ferme une baie de la porte).

Le vitrage 1 peut ainsi être un vitrage mobile par rapport à une partie de carrosserie elle-même mobile, comme une porte.

Le vitrage 1 peut être par ailleurs un vitrage mobile par rapport à une partie fixe de carrosserie, comme un montant latéral ou un toit.

Le vitrage 1 peut ainsi être :
- un vitrage de hayon, ou « backlite » en anglais, ou
- un vitrage de portière latérale, ouvrant elle-même par rotation ou par coulissement ;
   ou
- un vitrage de toit ouvrant, ou « sunroof » en anglais.

Le véhicule peut ainsi être équipé de plusieurs vitrage selon l'invention. Le véhicule peut être une automobile, ou un camion, ou tout autre type de véhicule.

Ce vitrage 1 réalise ainsi ici en position fermée une séparation verticale entre un espace intérieur I qui est à l'intérieur du véhicule et un espace extérieur E qui est à l'extérieur du véhicule.

Les notions de « extérieur » et « intérieur » sont donc considérées dans le présent document respectivement par rapport à cet espace extérieur E et cet espace intérieur I.

Comme il s'agit dans les figures d'un vitrage arrière, celui-ci s'étend pour l'essentiel selon l'axe généralement appelé « l'axe Y » du véhicule, qui est l'axe horizontal transversal, perpendiculaire à l'axe horizontal longitudinal d'avancé du véhicule équipé du vitrage selon l'invention en tant que vitrage arrière du véhicule et qui correspond à l'axe horizontal dans le plan de la feuille en [Fig.1].

Dans le cadre du présent document, la notion de « centripète » et celle de « centrifuge » est à considérer dans le plan de la feuille en [Fig.1], ou dans un plan général du vitrage lorsqu'il est considéré à plat, exprimé par rapport au centre du vitrage, selon les axes Y et Z ; le sens centripète est en direction de ce centre du vitrage alors que le sens centrifuge s'éloigne de ce centre du vitrage.

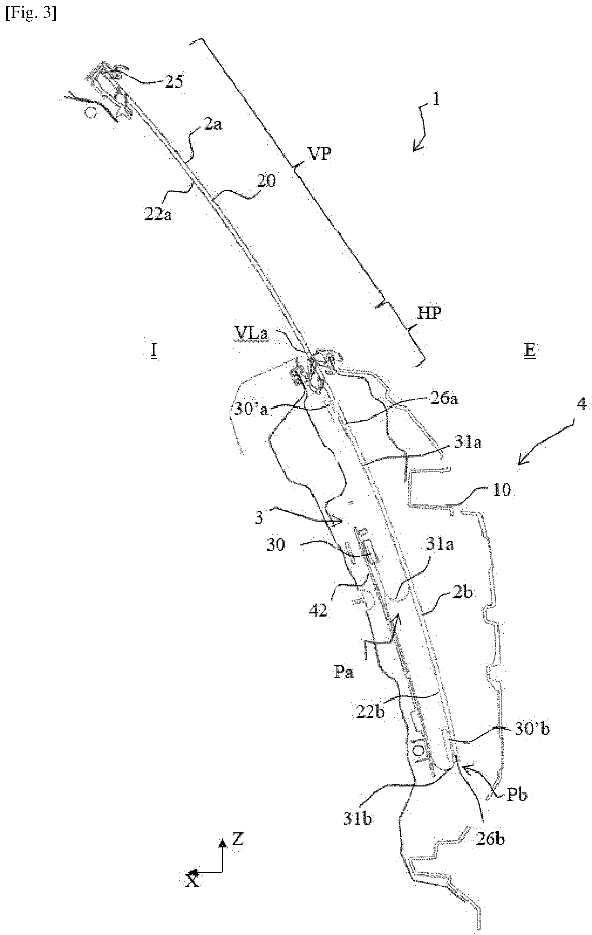

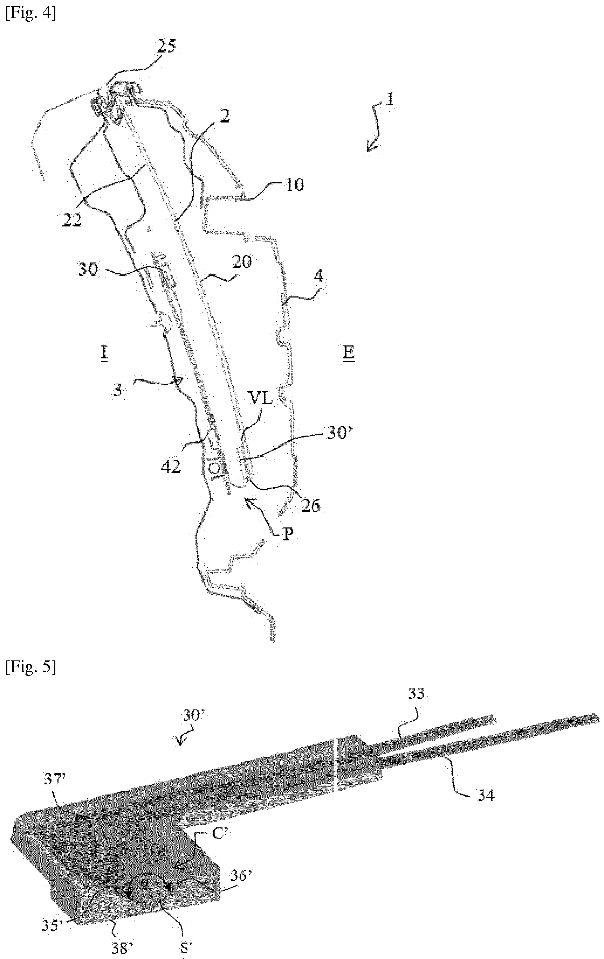

La mobilité du vitrage 1 par rapport à la porte 4 est essentiellement verticale dans le sens où cette mobilité s'opère selon l'axe Z, avec ici une petite composante selon l'axe horizontal longitudinal, comme visible en [Fig. 3 et 4].

Les [Fig. 1, 3 et 4] montrent que la vitre 2 présente une face extérieure 20 qui est orientée vers l'espace extérieur E, une face intérieure 22 qui est orientée vers l'espace intérieur I et un chant 21 périphérique situé entre ces deux faces.

En [Fig. 1, 3 et 4], le trait discontinu appelé « ligne de vision » ou « limite de vision » VL matérialise le haut du caisson de la porte à l'intérieur duquel le vitrage 1 coulisse. Cette ligne de vision VL réalise, lorsque le vitrage est considéré verticalement, une séparation entre d'une part une partie cachée de la vitre HP qui est située sous la ligne de vision VL et qui est destinée à être cachée à l'intérieur de la porte quelle que soit la position de la vitre par rapport à ladite porte et d'autre part une partie visible de la vitre VP qui est située au-dessus de la ligne de vision VL.

Dans la partie cachée du vitrage, sous la ligne LV, le vitrage présente une et de préférence ici deux, zones de fixation F, F', chaque zone étant destinée à accueillir des moyens pour permettre la mobilité de la vitre en translation verticale par rapport à la porte du véhicule. Dans le vitrage fini, chaque zone de fixation F, F' comporte un porte-vitre 6, 6' qui est fixé à la vitre.

Dans les exemples de réalisation illustrés, le vitrage 1 comporte une vitre 2 qui est bombée (c'est-à-dire non plate), ce qui complexifie son mouvement de translation.

La vitre 2 peut être complètement monolithique (constituée d'une seule feuille de verre ou de plastique) ou être complètement multiple (constituée de plusieurs feuilles de verre ou de plastique) ou encore être partiellement multiple dans une partie, comme par exemple dans la partie visible VP et partiellement monolithique, comme par exemple dans la partie cachée HP.

La vitre 2 présente un premier bord latéral 23, à gauche, un second bord latéral 24, à droite, un bord haut 25 et un bord bas 26. Le bord haut 25 et le bord bas 26 de la vitre sont disposés respectivement dans la partie de la vitre orientée vers le toit et dans la partie de la vitre orientée vers le sol sur lequel repose le véhicule.

Le vitrage comporte, outre la vitre, le long d'au moins une partie d'au moins un bord bas 26, au moins un porte-vitre 6, 6' qui est destiné à permettre d'accueillir un élément d'attachement, non représenté, qui a pour but de permettre d'attacher le porte-vitre dans un système de déplacement pour lever et baisser le vitrage. Certains documents parlent à ce sujet d'un système « de régulateur ».

Le vitrage, dans sa configuration d'utilisation, comporte ainsi de préférence deux porte-vitre 6, 6', un dans chaque zone de fixation F, F'.

La [Fig.3] illustre la vitre 2 dans deux positions :
- la vitre 2a correspond à la position « vitre fermée », lorsque la vitre 2 ferme la baie ménagée ici dans la porte ; et
- la vitre 2b correspond à la position « vitre ouverte », lorsque la baie ménagée ici dans la porte est ouverte.

La [Fig.4] illustre la vitre 2 uniquement en position « vitre ouverte », lorsque la baie ménagée ici dans la porte est ouverte.

Comme visible sur les [Fig. 1, 3 et 4], le vitrage 1 comporte au moins une liaison électrique flexible 3, 3a, 3b, illustrée en [Fig.2], pour alimenter le vitrage 1 en courant électrique et/ou en signal électrique.

Le vitrage 1 comporte ici une seule liaison électrique flexible 3, positionnée au centre du vitrage 1 et au centre de la porte 4. Le vitrage 1 pourrait comporter plusieurs liaisons électriques flexibles, par exemple pour alimenter plusieurs zones différentes du vitrage en courant électrique et/ou en signal électrique.

Lorsque le vitrage 1 est installé dans le véhicule, cette (ou ces) liaisons électriques flexibles 3 s'étende(nt) uniquement dans la partie cachée de la vitre HP ; elle(s) ne s'étende(nt) pas du tout dans ladite partie visible de la vitre VP, pour des raisons esthétiques. Elle(s) est (ou sont) située(s) complètement sous la ligne de vision VL.

Cette (ou ces) liaison(s) électrique(s) flexible(s) 3 est (ou sont) de préférence distinct des moyens pour permettre la mobilité de la vitre dans le vitrage final ; toutefois, il est possible que cette (ou ces) liaison(s) électrique(s) flexible(s) 3 soit (ou soient) en contact direct avec les moyens pour permettre la mobilité de la vitre dans le vitrage final ou soit (ou soient) intégrée(s) aux moyens pour permettre la mobilité de la vitre dans le vitrage final.

Comme visible en [Fig.3], quelle que soit la position de la vitre 2, la (ou les) liaison(s) électrique(s) flexible(s) 3 s'étend (s'étendent) entre la face intérieure 22 de la vitre et un élément de carrosserie adjacent, situé plus vers l'intérieur ; la (ou les) liaison(s) électrique(s) flexible(s) 3 ne s'étend pas (ne s'étendent pas) sous le chant 21 du bord inférieur 26 ni plus vers l'extérieur que la face extérieure 20 de la vitre 2.

Comme visible en [Fig. 2 et 3], la liaison électrique flexible 3 présente un connecteur amont 30 attachable à un élément intérieur 42 fixé à ladite carrosserie et un connecteur aval 30' attachable à la vitre 2 du vitrage 1. La liaison électrique flexible 3 comporte une nappe électrique flexible 31 comportant au moins un fil conducteur et/ou au moins une bande conductrice 32, 32' et présentant une forme latérale incurvée C, C' à la liaison avec le connecteur amont 30 et avec le connecteur aval 30'.

Les bande conductrice 32, 32' sont en cuivre et sont ici au nombre de deux mais il pourrait y en avoir plus. Elles sont noyées dans une matière plastique flexible 31 en polyimide ou en polyéthylène naphtalate.

Le connecteur amont 30 et le connecteur aval 30' comportent chacun une surface d'accueil S, S' qui est en contact avec ladite nappe électrique flexible 31 et qui est incurvée latéralement pour réaliser la forme latérale incurvée de la nappe électrique flexible.

La surface d'accueil S, S' du connecteur amont 30 et du connecteur aval 30' est incurvée longitudinalement et se termine à une extrémité proximale (à proximité de la vitre ou de l'élément intérieur fixé à la carrosserie) par une partie plate.

La forme latérale incurvée C, C' présente, vue en coupe transversale, une forme générale en V, avec un seule point d'incurvation, de préférence situé au milieu de la largeur de ladite nappe électrique flexible et avec un angle α entre deux ailes du V qui est compris entre 60 ° et 120 ° ; ici de 90 °.

Comme visible en [Fig.5], un connecteur aval 30' (ou un connecteur amont 30, non représenté en détail) est une pièce en matière plastique fabriquée par exemple par moulage et qui accueille l'extrémité aval de la nappe électrique flexible 31 (respectivement l'extrémité amont de la nappe électrique flexible 31). La forme latérale incurvée C' (respectivement la forme latérale incurvée C) est réalisée par des parois 35' et 36' en V sur le bord du connecteur, avec l'angle du V qui augmente progressivement pour devenir une paroi plate 37' ; il s'agit ainsi d'une forme pyramidale. A l'opposé de forme latérale incurvée C', un fond 38', plat, se retrouve en contact avec la vitre 2 lorsque la connexion électrique flexible est attachée à la vitre 2.

A l'opposée de la liaison avec la nappe électrique flexible, le connecteur avant comporte deux câbles électrique 33, 34 cylindriques qui sortent du connecteur.

La nappe électrique flexible 31 présente ici une largeur, à plat, de 20,0 mm et une épaisseur de 25 µm. Sa longueur dépend du chemin que le connecteur aval 30' doit parcourir entre la position ouverte et la position fermée de la vitre.

Dans le véhicule, le connecteur amont 30 est attaché à un élément intérieur 42 fixé à la porte 4 et le connecteur aval 30' est attaché à la vitre 2 pour permettre la connexion électrique. Le connecteur amont 30 est donc fixe dans le référentiel du vitrage 1 mobile en translation.

Le vitrage 1, après sa fabrication et avant son installation dans le véhicule, peut comporter des moyens destinés à protéger la (ou les) liaison(s) électrique(s) flexible(s) 3 afin qu'elle(s) ne soit (soient) pas endommagée(s) après la fabrication du vitrage 1 et avant son installation dans le véhicule.

Ces moyens peuvent être des éléments provisoires en plastique ou en carton, qui sont enlevés au moment de l'installation du vitrage dans le véhicule.

De préférence, pour protéger efficacement la (ou les) liaison(s) électrique(s) flexible(s) 3 sans utiliser d'élément provisoire jetable, le connecteur amont 30 et le connecteur aval 30' sont configurés pour pouvoir être attachés l'un à l'autre provisoirement. Ainsi, après installation du vitrage dans le véhicule, il suffit de détacher le connecteur amont 30 pour l'attacher au moyen de connexion électrique prévu dans l'environnement de l'élément intérieur 42.

La liaison électrique flexible 3 présente selon sa longueur un repli P, unique, présentant un rayon de courbure r compris entre 0,2 et 20,0 mm, de préférence compris entre 5,0 et 15,0 mm ; ici de 10,0 mm.

Ce repli P est ménagé dans la nappe électrique flexible et change de position le long de cette nappe électrique flexible lorsque le vitrage bouge par rapport à la carrosserie.

Le repli P est en position Pa, à proximité du connecteur amont 30 lorsque la vitre 2 est fermée (position de la vitre 2a en [Fig.3]) et est en position Pb, à proximité du connecteur aval 30' ou 30'b lorsque la vitre 2 est ouverte (position de la vitre 2b en [Fig.3] et position de la vitre 2 en [Fig.4]).

Comme visible en [Fig.2], à l'endroit du repli P, longitudinal, la bande conductrice ne présente pas une forme latérale incurvée : la bande conductrice est sensiblement plate latéralement.

Dans ces deux positions du repli : Pa et Pb, ainsi que dans toutes les positions intermédiaires entre ces deux positions extrêmes, le repli présente une épaisseur constante égale au double du rayon de courbure r, soit ici une épaisseur de repli P de 20,0 mm.

Dans les deux positions extrêmes de la vitre : 2a fermée et 2b ouverte, ainsi que dans toutes les positions intermédiaires entre ces deux positions extrêmes, la nappe électrique flexible 31a, 31b se trouve plus à l'intérieur que le chant du bord inférieur 26a, 26b ; la nappe électrique flexible 31 n'est jamais en contact avec ce chant, ni avec la face intérieure 22a, 22b de la vitre 2a, 2b, ni bien sûr avec l'arête située entre cette face intérieure et ce chant : il n'y a donc aucun risque que la nappe électrique flexible 31 soit abimée.

L'élément intérieur 42 est un guide intérieur pour la liaison électrique flexible 3 ; il l'empêche d'aller plus vers l'intérieur. Il s'agit d'une plaque en plastique de forme rectangulaire et positionnée allongée dans le sens de la hauteur pour que la nappe électrique flexible 31 glisse facilement à sa surface.

Un porte-vitre présente par exemple en coupe transversale selon un axe vertical sensiblement une forme en U venant enchâsser une partie longitudinale du bord bas 26.

Un porte-vitre 6, 6' peut ainsi présenter :
- une partie en U constituée de deux parois parallèles reliées à leur base et formant une rainure longitudinale, avec la base de ce U en vis-à-vis du chant 21 de vitre. Le porte-vitre est destiné à être relié à un système d'entraînement motorisé non illustré pour permettre la montée et la descente du vitrage dans la portière du véhicule. La partie en U enchâsse le bord bas 26.

En [Fig.1], les porte-vitre 6, 6' ne comportent pas de trou de fixation mais il est possible qu'un ou que chaque porte-vitre comporte un trou de fixation.

Le (ou les) porte-vitre 6, 6' est (ou sont) encollés(s) à l'aide d'un cordon de colle par exemple de polyuréthanne, puis « chaussé(s) » sur la vitre, c'est-à-dire qu'il(s) est (ou sont) positionné(s) de manière à ce que la vitre soit présente dans la forme en U, en butée ou non, en insérant entre lesdites parois parallèles et la vitre une matière d'insertion en plastique, comme par exemple du polypropylène.

Dans une variante, il est proposé une injection in-situ de matière adhésive destinée à former la matière d'insertion, qui est en résine thermofusible thermoplastique, par exemple à base de polyamide.

La résine thermofusible utilisée présente une limite d'élasticité d'environ 5,5 N/mm² et une résistance à la rupture de 11 N/mm², calculées selon la norme DIN 53455. Elle doit être utilisée à une température d'environ 220 °C et présente à cette température une viscosité de l'ordre de 5000 mPa.s, mesurée selon la norme ASTM D 3236.

Les porte-vitre utilisés sont, de préférence, en matière plastique, comme par exemple en polyamide et notamment en PA 66, chargé de fibres de verre ; ils peuvent éventuellement être en alliage d'aluminium. A titre d'exemple, avec un alliage d'aluminium de nuance 6060 (AGS), une force de pressage verticale de 30 à 50 tonnes est suffisante, c'est-à-dire rapporté à la taille des porte-vitre, des efforts d'environ 150 GPa pour des porte-vitre en U de dimension hors-tout d'environ 40x30 mm et d'environ 450 GPa pour des porte-vitre en U de dimension hors-tout d'environ 60x60 mm.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Liaison électrique flexible (3) pour un vitrage (1) de véhicule mobile en translation par rapport à un élément de carrosserie dudit véhicule, ladite liaison électrique flexible (3) présentant, selon sa longueur, un connecteur amont (30) attachable à un élément intérieur (42) fixé à ladite carrosserie et un connecteur aval (30') attachable à une vitre (2) dudit vitrage (1), **caractérisé en ce qu'**elle comporte une nappe électrique flexible (31) comportant au moins un fil conducteur et/ou au moins une bande conductrice (32, 32') et présentant une forme latérale incurvée (C, C') sur elle-même à la liaison avec ledit connecteur amont (30) et avec ledit connecteur aval (30').

2. Liaison électrique flexible (3) selon la revendication 1, dans laquelle ledit connecteur amont (30) et ledit connecteur aval (30') comportent chacun une surface d'accueil (S, S') qui est en contact avec ladite nappe électrique flexible (31) et qui est incurvée latéralement.

3. Liaison électrique flexible (3) selon la revendication 2, dans laquelle ladite surface d'accueil (S, S') dudit connecteur amont (30) et/ou dudit connecteur aval (30') est incurvée longitudinalement et se termine à une extrémité proximale par une partie plate.

4. Liaison électrique flexible (3) selon l'une quelconque des revendications 1 à 3, dans laquelle au moins une desdites formes latérales incurvées (C, C'), et de préférence chaque forme latérale incurvée (C, C'), présente, vue en coupe transversale, une forme générale en V, avec un angle (α) entre deux ailes du V qui est compris entre 60 ° et 120 °, voire entre 80 ° et 100 °, de préférence de 90 °.

5. Vitrage (1) de véhicule comportant une vitre (2), des moyens pour permettre la mobilité de ladite vitre en translation par rapport à un élément de carrosserie dudit véhicule et au moins une liaison électrique flexible (3) selon l'une quelconque des revendications 1 à 4, dans lequel ledit connecteur aval (30') est attaché à ladite vitre (2).

6. Vitrage (1) selon la revendication 5, dans lequel ladite vitre (2) comporte des moyens pour chauffer ladite vitre (2) et/ou des moyens pour éclaircir et assombrir ladite vitre (2) et/ou pour changer la teinte de ladite vitre (2).

7. Véhicule équipé d'un vitrage (1) comportant une vitre (2), des moyens pour permettre la mobilité de ladite vitre (2) en translation par rapport à un élément de carrosserie dudit véhicule et au moins une liaison électrique flexible (3) selon l'une quelconque des revendications 1 à 4, dans lequel ledit connecteur amont (30) est attaché à un élément intérieur (42) fixé à ladite carrosserie et ledit connecteur aval (30') est attaché à ladite vitre (2).

8. Véhicule selon la revendication 7, dans lequel ladite nappe électrique flexible (31) présente selon sa longueur un repli (P) présentant un rayon de courbure (r) compris entre 0,2 et 20,0 mm, de préférence compris entre 5,0 et 15,0 mm.

9. Véhicule selon la revendication 7 ou 8, dans lequel ladite vitre (2) comporte des moyens pour chauffer ladite vitre (2) et/ou des moyens pour éclaircir et assombrir ladite vitre (2) et/ou pour changer la teinte de ladite vitre (2).

10. Véhicule selon l'une quelconque des revendications 7 à 9, dans lequel ladite nappe électrique flexible (31), et de préférence chaque nappe électrique flexible (31), s'étend selon sa longueur dans une direction parallèle à une composante essentielle de la direction de translation de ladite vitre (2).

11. Véhicule selon l'une quelconque des revendications 7 à 10, dans lequel ledit élément intérieur (42) est un guide intérieur pour ladite nappe électrique flexible (31).

## Patentansprüche

1. Flexible elektrische Verbindung (3) für eine Fahrzeugverglasung (1), die relativ zu einem Karosserieelement des Fahrzeugs translatorisch bewegbar ist, wobei die flexible elektrische Verbindung (3) entlang ihrer Länge einen stromaufwärtigen Steckverbinder (30), der an einem Innenelement (42) anbringbar ist, das an der Karosserie befestigt ist, und einen stromabwärtigen Steckverbinder (30') aufweist, der an einer Scheibe (2) der Verglasung (1) anbringbar ist, **dadurch gekennzeichnet, dass** sie eine flexible elektrische ebene Anordnung (31) umfasst, die mindestens einen leitfähigen Draht und/oder mindestens einen leitfähigen Streifen (32, 32') umfasst und an der Verbindung mit dem stromaufwärtigen Steckverbinder (30) und mit dem stromabwärtigen Steckverbinder (30') eine auf sich selbst gebogene seitliche Form (C, C') aufweist.

2. Flexible elektrische Verbindung (3) nach Anspruch 1,wobei der stromaufwärtige Steckverbinder (30) und der stromabwärtige Steckverbinder (30') jeweils eine Aufnahmeoberfläche (S, S') umfassen, die mit der flexiblen elektrischen ebenen Anordnung (31) in Kontakt steht und die seitlich gebogen ist.

3. Flexible elektrische Verbindung (3) nach Anspruch 2, wobei die Aufnahmeoberfläche (S, S') des stromaufwärtigen Steckverbinders (30) und/oder des stromabwärtigen Steckverbinders (30') in Längsrichtung gebogen ist und an einem proximalen Ende mit einem flachen Teil endet.

4. Flexible elektrische Verbindung (3) nach einem der Ansprüche 1 bis 3, wobei mindestens eine der gebogenen Seitenformen (C, C') und vorzugsweise jede gebogene seitliche Form (C, C') im Querschnitt gesehen eine allgemeine V-Form mit einem Winkel (α) zwischen zwei Flügeln des V aufweist, der zwischen 60° und 120° oder sogar zwischen 80° und 100°, vorzugsweise 90°, liegt.

5. Fahrzeugverglasung (1), die eine Scheibe (2), Mittel zum Ermöglichen der Translationsbewegbarkeit der Scheibe relativ zu einem Karosserieelement des Fahrzeugs und mindestens eine flexible elektrische Verbindung (3) nach einem der Ansprüche 1 bis 4 umfasst, wobei der stromabwärtige Steckverbinder (30') an der Scheibe (2) angebracht ist.

6. Verglasung (1) nach Anspruch 5, wobei die Scheibe (2) Mittel zum Heizen der Scheibe (2) und/oder Mittel zum Aufhellen und Abdunkeln der Scheibe (2) und/oder zum Ändern der Tönung der Scheibe (2) umfasst.

7. Fahrzeug, das mit einer Verglasung (1) ausgestattet ist, die eine Scheibe (2), Mittel zum Ermöglichen der Translationsbewegbarkeit der Scheibe (2) relativ zu einem Karosserieelement des Fahrzeugs und mindestens eine flexible elektrische Verbindung (3) nach einem der Ansprüche 1 bis 4 umfasst, wobei der stromaufwärtige Steckverbinder (30) an einem Innenelement (42), das an der Karosserie befestigt ist, angebracht ist und der stromabwärtige Steckverbinder (30') an der Scheibe (2) angebracht ist.

8. Fahrzeug nach Anspruch 7, wobei die flexible elektrische ebene Anordnung (31) entlang ihrer Länge eine Falte (P) aufweist, die einen Krümmungsradius (r) zwischen 0,2 und 20,0 mm, vorzugsweise zwischen 5,0 und 15,0 mm aufweist.

9. Fahrzeug nach Anspruch 7 oder 8, wobei die Scheibe (2) Mittel zum Heizen der Scheibe (2) und/oder Mittel zum Aufhellen und Abdunkeln der Scheibe (2) und/oder zum Ändern der Tönung der Scheibe (2) umfasst.

10. Fahrzeug nach einem der Ansprüche 7 bis 9, wobei sich die flexible elektrische ebene Anordnung (31) und vorzugsweise jede flexible elektrische ebene Anordnung (31) entlang ihrer Länge in einer Richtung parallel zu einer wesentlichen Komponente der Translationsrichtung der Scheibe (2) erstreckt.

11. Fahrzeug nach einem der Ansprüche 7 bis 10, wobei das Innenelement (42) eine Innenführung für die flexible elektrische ebene Anordnung (31) ist.

## Claims

1. A flexible electrical connection (3) for a vehicle glazing (1) movable in translation relative to a bodywork element of said vehicle, said flexible electrical connection (3) having, along its length, an upstream connector (30) attachable to an inner element (42) fixed to said bodywork and a downstream connector (30') attachable to a glass pane (2) of said glazing (1), **characterized in that it** comprises a flexible ribbon cable (31) comprising at least one conductive wire and/or at least one conductive strip (32, 32') and having a curved lateral shape (C, C') on itself to the connection with said upstream connector (30) and with said downstream connector (30').

2. The flexible electrical connection (3) according to claim 1, wherein said upstream connector (30) and said downstream connector (30') each comprise a receiving surface (S, S') which is in contact with said flexible ribbon cable (31) and which is curved laterally.

3. The flexible electrical connection (3) according to claim 2, wherein said receiving surface (S, S') of said upstream connector (30) and/or said downstream connector (30') is curved longitudinally and terminates at a proximal end by a flat part.

4. The flexible electrical connection (3) according to any one of claims 1 to 3, wherein at least one of said curved lateral shapes (C, C'), and preferably each curved lateral shape (C, C'), has, seen in cross section, a general V-shape, with an angle (α) between two wings of the V which is between 60° and 120°, or even between 80° and 100°, preferably 90°.

5. The vehicle glazing (1) comprising a glass pane (2), means for allowing the mobility of said glass pane in translation relative to a bodywork element of said vehicle and at least one flexible electrical connection (3) according to any one of claims 1 to 4, wherein said downstream connector (30') is attached to said glass pane (2).

6. The glazing (1) according to claim 5, wherein said glass pane (2) comprises means for heating said glass pane (2) and/or means for lightening and darkening said glass pane (2) and/or for changing the hue of said glass pane (2).

7. A vehicle equipped with a glazing (1) comprising a glass pane (2), means for allowing the mobility of said glass pane (2) in translation relative to a bodywork element of said vehicle, and at least one flexible electrical connection (3) according to any one of claims 1 to 4, wherein said upstream connector (30) is attached to an inner element (42) fixed to said bodywork and said downstream connector (30') is attached to said glass pane (2).

8. The vehicle according to claim 7, wherein said flexible ribbon cable (31) has, along its length, a fold (P) having a radius of curvature (r) between 0.2 and 20.0 mm, preferably between 5.0 and 15.0 mm.

9. The vehicle according to claim 7 or 8, wherein said glass pane (2) comprises means for heating said glass pane (2) and/or means for lightening and darkening said glass pane (2) and/or for changing the hue of said glass pane (2).

10. The vehicle according to any one of claims 7 to 9, wherein said flexible ribbon cable (31), and preferably each flexible ribbon cable (31), extends along its length in a direction parallel to an essential component of the direction of translation of said glass pane (2).

11. The vehicle according to any one of claims 7 to 10, wherein said inner element (42) is an interior guide for said flexible ribbon cable (31).
